# EUROPÄISCHE PATENTANMELDUNG

(11) **EP 3 418 312 A1**
(43) Veröffentlichungstag der Anmeldung: **26.12.2018**
(21) Anmeldenummer: 17177416.9
(22) Anmeldetag: 22.06.2017
(51) Int. Cl.: C08G 59/42, C08G 59/62, C09J 163/00, C08G 59/40, C08L 63/00, C09J 5/06

(54) **VERFAHREN ZUR VERBINDUNG VON FORMKÖRPERN DURCH INJEKTION EINER EINKOMPONENTIGEN HITZEHÄRTENDEN EPOXIDHARZZUSAMMENSETZUNG IN HOHLRÄUME**

(71) Anmelder: SIKA TECHNOLOGY AG, 6340 Baar (CH)
(72) Erfinder: Munzinger, Noah, 8047 Zürich (CH); Voci, Antonio, 8050 Zürich (CH); Rheinegger, Urs, 8105 Regensdorf (CH)
(74) Vertreter: Sika Patent Attorneys

(57) **Zusammenfassung**

Die vorliegende Erfindung betrifft ein Verfahren zur Verbindung von zwei Formkörpern **S1** und **S2,** das Verfahren umfassend die Schritte:
a) Bereitstellen eines Formkörpers **S1;**
b) Anordnen eines Formkörpers **S2** an dem Formkörper **S1,** wobei sich ein Hohlraum (1) zwischen den beiden Formkörpern **S1** und **S2** bildet,
c) Einbringen einer einkomponentigen hitzehärtenden Epoxidharzzusammensetzungen in den Hohlraum (1),
wobei es sich bei der einkomponentigen hitzehärtenden Epoxidharzzusammensetzung um eine einkomponentige hitzehärtende Epoxidharzzusammensetzung handelt enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein Polyesterpolyol **PP,** erhältlich durch die Reaktion von
-mindestens einem Diol mit der Struktur HO-(CH₂)_{x'}-OH, wobei der Wert von x' = 2 bis 10 ist, und
-mindestens einer Dicarbonsäure mit der Struktur HOOC-(CH₂)_{y'}-COOH sowie Derivate dieser Dicarbonsäure, wobei der Wert von y' = 8 bis 18 ist,
und wobei der Anteil des Polyesterpolyol **PP** 1.5 - 20 Gew.-% beträgt, bezogen auf das Gesamtgewicht der einkomponentigen hitzehärtenden Epoxidharzzusammensetzung.

Das erfindungsgemässe Verfahren hat den Vorteil, dass zur Verbindung von zwei Formkörpern kein fluiddicht abgeschlossener Raum für den Klebstoff vorgesehen werden muss, sondern dass ein kostengünstigeres und einfacher zu handhabendes offenes System ohne fluiddicht abgeschlossene Zwischenräume verwendet werden kann.

## Beschreibung

### Technisches Gebiet

Die Erfindung betrifft ein Verfahren zur Verbindung, insbesondere strukturellen Verbindung, von zwei Formkörpern, insbesondere Karosserieelemente für Kraftfahrzeuge, sowie die Verwendung von einkomponentigen hitzehärtenden Epoxidharzzusammensetzung in solchen Verfahren.

### Stand der Technik

Einkomponentige hitzehärtende Epoxidharzzusammensetzungen werden häufig zum Verbinden von Metallsubstraten wie Stahlblechen eingesetzt, wenn hohe Festigkeiten erforderlich sind, z.B. im Automobilbau.

Beim Verbund solcher Formkörper werden diese zur Verbindung miteinander verklebt. Dabei kommen typischerweise Klebstoffe zum Einsatz, welche als Klebstoffraupen auf einen ersten Formkörper aufgebracht werden, wobei ein zweiter zu verklebender Formkörper danach auf diese Klebstoffraupe aufgebracht wird, zur Verklebung der beiden Formkörper.

Eine weitere Methode zur Verbindung von Formkörpern wie Blechen, Gussteilen und Extrusionsprofilen sieht vor, dass ein flüssiger Klebstoff in eine geschlossene Kavität injiziert wird, um dadurch die zu verbindenden Formkörper miteinander zu verklebt. Ein Nachteil dieser Methode ist es, dass fluiddicht geschlossene Hohlräume geschaffen werden müssen, welche einen Raum für den flüssigen Klebstoff vorgeben. Dies kann beispielsweise mit Dichtungen erreicht werden oder erfordert Elemente mit sehr kleinen Fertigungstoleranzen. Das hat zur Folge, dass solche Systeme aufwendig und kostspielig in der Herstellung sind.

### Darstellung der Erfindung

Die Aufgabe der vorliegenden Erfindung ist es daher, ein verbessertes Verfahren zur Verbindung, insbesondere strukturellen Verbindung, von zwei Formkörpern zur Verfügung zu stellen, welches erlaubt, Formkörper wie beispielsweise Karosserieelemente in Kraftfahrzeugen kostengünstiger und einfacher in der Handhabung miteinander zu verbinden.

Diese Aufgabe wird überraschenderweise gelöst durch ein Verfahren gemäss Anspruch 1.

Das erfindungsgemässe Verfahren hat den Vorteil, dass zur Verbindung von zwei Formkörpern kein fluiddicht abgeschlossener Raum für den Klebstoff vorgesehen werden muss, sondern dass ein kostengünstigeres und einfacher zu handhabendes offenes System ohne fluiddicht abgeschlossene Zwischenräume verwendet werden kann. Somit können beispielsweise Karosserieelemente verwendet werden, welche keine Dichtungen aufweisen, was einem wesentlichen Kostenvorteil entspricht. Weiterhin erlaubt es die vorliegende Erfindung, auch Formkörper mit grösseren Fertigungstoleranzen miteinander zu verbinden, respektive verkleben, weil keine fluiddicht abgeschlossenen Räume für den Klebstoff vorgesehen werden müssen. Auch dies entspricht einem wesentlichen Kostenvorteil gegenüber den bekannten Systemen, weil dadurch die verschiedenen Elemente des Systems kostengünstiger und mit grösseren Fertigungstoleranzen hergestellt werden können. Zudem ist ein Vorgang des Verbindens der Formkörper einfacher zu bewerkstelligen, da ein Befüllen von geschlossenen Räumen mit Klebstoff Schwierigkeiten mit sich bringt, welche hierdurch vermieden werden können, insbesondere das Verdrängen der Luft im geschlossenen Hohlraum durch den Klebstoff.

Weiter Aspekte der Erfindung sind Gegenstand der weiteren unabhängigen Ansprüche, bevorzugte Ausführungen der Erfindung sind Gegenstand der abhängigen Ansprüche.

### Wege zur Ausführung der Erfindung

Die vorliegende Erfindung betrifft somit ein Verfahren zur Verbindung, insbesondere strukturellen Verbindung, von zwei Formkörpern **S1** und **S2**, das Verfahren umfassend die Schritte:
a) Bereitstellen eines Formkörpers **S1**;
b) Anordnen eines Formkörpers **S2** an dem Formkörper **S1,** wobei sich ein Hohlraum (1) zwischen den beiden Formkörpern **S1** und **S2** bildet,
c) Einbringen einer einkomponentigen hitzehärtenden Epoxidharzzusammensetzungen in den Hohlraum (1),
wobei es sich bei der einkomponentigen hitzehärtenden Epoxidharzzusammensetzung um eine einkomponentige hitzehärtende Epoxidharzzusammensetzung handelt enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein Polyesterpolyol **PP**, erhältlich durch die Reaktion von
   - mindestens einem Diol mit der Struktur HO-(CH₂)_{x'}-OH, wobei der Wert von x' = 2 bis 10 ist, und
   - mindestens einer Dicarbonsäure mit der Struktur HOOC-(CH₂)_{y'}-COOH sowie Derivate dieser Dicarbonsäure, wobei der Wert von y' = 8 bis 18 ist.

Der Anteil des Polyesterpolyol **PP** beträgt 1.5 - 20 Gew.-%, bezogen auf das Gesamtgewicht der einkomponentigen hitzehärtenden Epoxidharzzusammensetzung

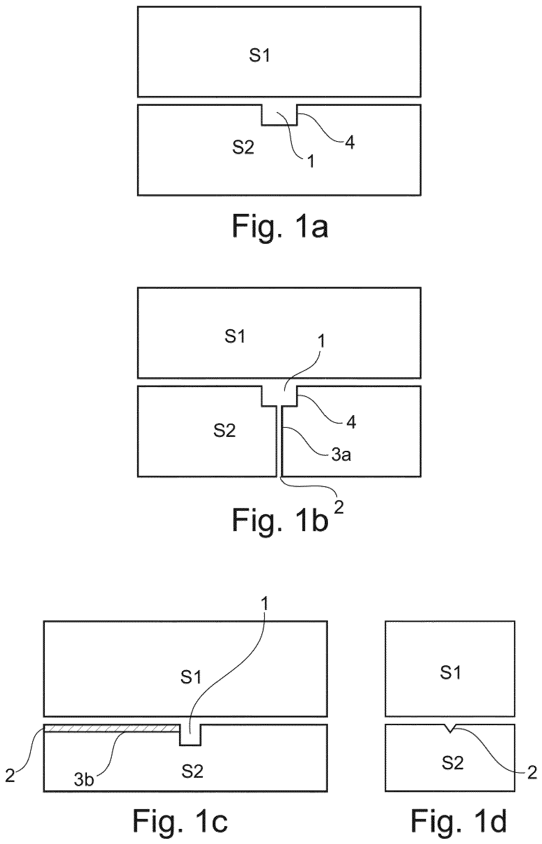

In Figur 1a ist ein Querschnitt von zwei nach Schritt b) aneinander angeordneten Formkörpern **S1** und **S2** dargestellt, welche einen Hohlraum (1) zwischen einander aufweisen.

Vorzugsweise handelt es sich bei dem Hohlraum (1) um einen offenen Hohlraum. Die Bezeichnung "offen" bzw. "offener Hohlraum" bedeutet in diesem Dokument "flüssigkeitsdurchlässig" oder "nicht abgedichtet".

Weiter ist es vorteilhaft, wenn sich der Abstand in dem Hohlraum (1) zwischen den beiden Formkörpern nach dem Schritt b) des Anordnens eines Formkörpers **S2** an dem Formkörper **S1** im Wesentlichen nicht ändert. Unter dem Begriff "im Wesentlichen" wird vorzugsweise eine Veränderung des Abstands von weniger als 30%, weniger als 20%, insbesondere weniger als 10%, verstanden.

Weiter kann es vorteilhaft sein, wenn sich der Abstand zwischen den beiden Formkörpern 0 - 100 mm, insbesondere 0 - 30 mm, neben dem Hohlraum (1) nach dem Schritt b) des Anordnens eines Formkörpers **S2** an dem Formkörper S1 im Wesentlichen nicht ändert. Unter dem Begriff "im Wesentlichen" wird dabei vorzugsweise eine Veränderung des Abstands von weniger als 30%, weniger als 20%, insbesondere weniger als 10%, verstanden.

Weiter kann es vorteilhaft sein, wenn der Abstand zwischen den beiden Formkörpern 0 - 100 mm, insbesondere 0 - 30 mm, neben dem Hohlraum (1) nach dem Schritt b) 0.5 - 15 mm, insbesondere 0.5 - 10 mm, bevorzugt 0.5 - 5 mm, besonders bevorzugt 1 - 3 mm, beträgt.

Es kann weiter bevorzugt sein, wenn die einkomponentige hitzehärtende Epoxidharzzusammensetzung durch mindestens eine Einfüllöffnung (2) in mindestens einem der beiden Formkörper eingebracht wird. Eine solche Einfüllöffnung (2) ist beispielsweise in der Figur 1b in dem Formkörper **S2** ersichtlich. Vorzugsweise ist die Einfüllöffnung (2) auf der dem anderen Formkörper abgewandten Seite des Formkörpers angeordnet.

Weiter ist die die mindestens eine Einfüllöffnung (2) bevorzugt über einen Einfüllkanal (3a) direkt mit dem Hohlraum (1) verbunden.

Es kann jedoch auf vorteilhaft sein, wenn, wie im Querschnitt von Figur 1 c gezeigt, die einkomponentige hitzehärtende Epoxidharzzusammensetzung durch einen Einfüllkanal (3b) in den Hohlraum (1) eingebracht wird, wobei die Einfüllkanal (3b) auf der Oberfläche von mindestens einem der beiden Formkörper angeordnet ist, welche dem anderen Formkörper zugewandt ist. Die Figur 1d zeigt eine seitliche Ansicht der beiden aneinander angeordneten Formkörper.

Bei dem Hohlraum (1) handelt es sich vorzugsweise um eine Verbindungsstelle für den Verbund der beiden Formkörper, insbesondere eine beabsichtigte strukturelle Verbindungsstelle. Diese ist daher vorzugsweise derart ausgestaltet, dass sie eine ausreichende Menge an Epoxidharzzusammensetzung aufnehmen kann, damit eine strukturelle Verbindung zwischen den beiden Formkörpern gewährleistet werden kann. Dafür sind insbesondere eine geeignete Dicke der eingebrachten Epoxidharzzusammensetzung sowie eine geeignete Kontaktfläche der eingebrachten Epoxidharzzusammensetzung zu dem Formkörper **S1,** respektive Formkörper **S2,** vorteilhaft.

Vorzugsweise handelt es sich bei dem Hohlraum (1) um eine Materialaussparung (4) in mindestens einem der beiden Formkörper.

Die Formkörpern **S1** und **S2** können aus dem gleichen oder einem unterschiedlichen Material sein. Vorzugsweise handelt es sich um Formkörper aus Metall oder anderen hitzebeständigen Materialien, insbesondere Metall oder hitzebeständige Kunststoffe wie z.B. Polyamide (PA), Polyphenylenether, z.B. Noryl^{®}, oder hitzebeständige faserverstärkte Kunststoffe wie carbonfaserverstärkte Kunststoffe (CFK) oder glasfaserverstärkte Kunststoffe (GFK). Beispiele für geeignete Metalle sind insbesondere Stahl, insbesondere elektrolytisch verzinkter Stahl, feuerverzinkter Stahl oder beölter Stahl, Bonazink-beschichteter Stahl, und nachträglich phosphatierter Stahl, sowie Aluminium.

Als Formkörper **S1** und **S2** sind insbesondere Formkörper geeignet, wie sie z.B. im Transportmittelbau, z.B. in der Automobilindustrie, oder bei der Herstellung von Weisswaren benutzt werden.

Überraschenderweise wurde gefunden, dass durch den Einsatz einer einkomponentigen hitzehärtenden Epoxidharzzusammensetzung gemäss Anspruch 1 ein sich selbst abdichtendes System geschaffen werden kann. Es wurde überraschenderweise gefunden, dass unter Verwendung einer solchen Epoxidharzzusammensetzungen, welche bei einer Abkühlung einen scharfen Übergang zwischen einem nicht verfestigten und einem verfestigten Zustand aufweist, offene Systeme ohne die Verwendung von beispielsweise Dichtungselementen verbunden werden können.

In Schritt b) des Anordnens des Formkörpers **S2** an dem Formkörper **S1,** bildet sich ein Hohlraum (1) zwischen den beiden Formkörpern **S1** und **S2.**

Die beiden Formkörper können dabei beispielsweise derart aneinander angeordnet werden, dass sich die beiden Formkörper an mindestens einer Stelle direkt berühren oder sie können beabstandet voneinander angeordnet werden. Vorzugsweise werden in Schritt b) die beiden Formkörpern **S1** und **S2** durch einseitige oder zweiseitige mechanische Fügetechnik, insbesondere durch Nieten, Schweissen, Schrauben oder Bolzen vorfixiert, gegebenenfalls unter Verwendung von Abstandhaltern. Diese Fügetechnik soll insbesondere sicherstellen, dass die beiden aneinander angeordneten Formkörpern **S1** und **S2** in der vorgesehenen Position verbleiben, bevor die eingebrachte Epoxidharzzusammensetzung verfestigt und/oder ausgehärtet ist.

Die Epoxidharzzusammensetzung ist einkomponentig, d.h. die Bestandteile der Epoxidharzzusammensetzung, insbesondere mindestens eine Epoxidharz **A,** der mindestens eine Härter **B** und das mindestens eine Polyesterpolyol **PP,** sind in einer Komponente enthalten, ohne dass bei üblicher Umgebungstemperatur bzw. Raumtemperatur eine Härtung stattfindet. Daher ist die einkomponentige Epoxidharzzusammensetzung lagerstabil. Es ist daher in dieser Form handelbar, während bei zweikomponentigen Systemen die Mischung der Komponenten erst unmittelbar vor der Anwendung möglich ist.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Unter einem "Zähigkeitsverbesserer" wird in diesem Dokument ein Zusatz zu einer Epoxidharzmatrix verstanden, der bereits bei geringen Zuschlägen von ≥ 5 Gew.-%, insbesondere ≥ 10 Gew.-%, bezogen auf das Gesamtgewicht der Epoxidharzzusammensetzungen, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23°C bezeichnet.

Unter dem Begriff "strukturell" in Bezug auf die Art der Verbindung zwischen Formkörpern versteht man im vorliegenden Dokument insbesondere eine Verbindung anhand einer ausgehärteten Epoxidharzzusammensetzung, welche mechanischen Eigenschaften aufweist, wie sie nachgehend als bevorzugte mechanische Eigenschaften, insbesondere in Bezug auf Zugfestigkeit, Bruchdehnung und E-Modul, aufgeführt sind.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

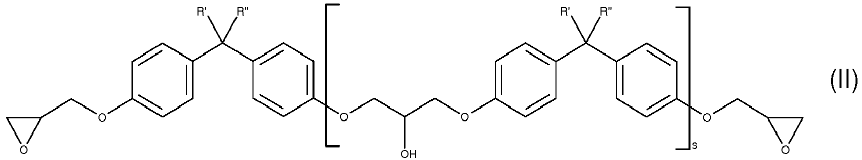

Hierbei stehen die Substituenten R' und R" unabhängig voneinander entweder für H oder CH₃.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 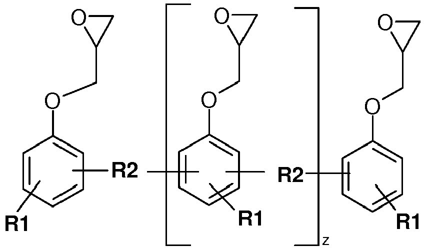 mit R2= 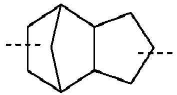 oder CH₂, **R1** = H oder Methyl und z = 0 bis 7.

Insbesondere handelt es sich hierbei um Phenol- oder Kresol-Epoxid-Novolake (**R2** = CH₂).

Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **A** ein Epoxid-Flüssigharz der Formel (II) dar.

In einer besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 50 Gew.-%, bezogen auf das Gesamtgewicht der Epoxidharzzusammensetzung.

Weiter ist es vorteilhaft, wenn es sich bei 50-100 Gew.-%, insbesondere 80-100 Gew.-%, des Epoxidharzes **A** um ein vorgenanntes Epoxid-Flüssigharz handelt.

Weiter ist es vorteilhaft, wenn es sich bei 0-30 Gew.-%, insbesondere 0-20 Gew.-%, besonders bevorzugt 5-15 Gew.-%, des Epoxidharzes **A** um ein vorgenanntes Epoxid-Festharz handelt.

Die hitzehärtende einkomponentige Epoxidharzzusammensetzung enthält ferner mindestens einen Härter **B** für Epoxidharze, welcher durch erhöhte Temperatur aktiviert wird. Solche latenten Härter sind bei Raumtemperatur im Wesentlichen inert und werden durch erhöhte Temperatur, typischerweise bei Temperaturen von 70°C oder mehr, aktiviert, wodurch die Härtungsreaktion gestartet wird. Es können die üblichen latenten Härter für Epoxidharze eingesetzt werden. Es handelt sich bevorzugt um einen latenten Stickstoff enthaltenden Härter für Epoxidharze.

Beispiele für geeignete latente Härter sind Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), sowie Imidazole und Amin-Komplexe.

Besonders bevorzugt als latenter Härter ist Dicyandiamid.

Der Anteil des Härters **B** beträgt bevorzugt 0,5 bis 12 Gew.-%, bevorzugter 1 bis 8 Gew.-%, bezogen auf das Gesamtgewicht des Epoxidharzzusammensetzung.

Die hitzehärtende einkomponentige Epoxidharzzusammensetzung enthält ferner mindestens ein Polyesterpolyol **PP,** erhältlich durch die Reaktion von
- mindestens einem Diol mit der Struktur HO-(CH₂)_{x'}-OH, wobei der Wert von x' = 2 bis 10 ist, und
- mindestens einer Dicarbonsäure mit der Struktur HOOC-(CH₂)_{y'}-COOH sowie Derivate dieser Dicarbonsäure, wobei der Wert von y' = 8 bis 18 ist.

Vorzugsweise handelt es sich bei Derivaten dieser Dicarbonsäuren um Carbonsäureester (speziell die Methyl- und Ethylester), Säurehalogenide (wie z.B. Säurechloride) und Säureanhydride.

Der Schmelzpunkt wird vorzugsweise mit einem DSC-Gerät (DIN 53 765) bestimmt. Die Probe und ein leerer Referenztiegel werden mit einer Aufheizrate von 20°C/min erwärmt. Der Schmelzpunkt entspricht dem Maximum des Schmelzpeaks.

Das Polyesterpolyol **PP** hat vorzugsweise einen Erweichungspunkt von 50 bis 110°-C, insbesondere 70 bis 95ºC. Der Erweichungspunkt (Softening point) wird in diesem Dokumente nach der Ring & Kugel- Methode gemäss DIN ISO 4625 ermittelt.

Bevorzugte Polyesterpolyole **PP** haben auch ein zahlenmittleres Molekulargewicht von 1500 bis 9000, bevorzugt 1500 bis 6000, besonders bevorzugt von 2500 - 5000.

Bevorzugte Polyesterpolyole **PP** haben eine Hydroxyzahl (Milliäquivalente KOH pro Gramm Polyesterpolyol) von etwa 20 bis 50, bevorzugt etwa 25 bis 40.

Weiter haben bevorzugte Polyesterpolyol eine Hydroxyfunktionalität von etwa 2, insbesondere von 1.9 bis 2.1 (mittlere Anzahl von Hydroxygruppen pro Polymerkette).

Vorzugsweise ist das Diol, das bei der Herstellung der Polyesterpolyole **PP** verwendbar ist, ausgewählt aus der Liste bestehend aus Ethylenglycol, 1,4-Butandiol, 1,5-Pentandiol, 1,6-Hexandiol, 1,8-Octandiol und 1,10-Decandiol. Es sind auch Mischungen davon möglich.

Ethylenglycol, 1,4-Butandiol und 1,6-Hexandiol, insbesondere Ethylenglycol und 1,6-Hexandiol, besonders 1,6-Hexandiol, sind die am meisten bevorzugten.

Vorzugsweise ist die Dicarbonsäure, die bei der Herstellung der Polyesterpolyole **PP** verwendbar ist, ausgewählt aus der Liste bestehend aus Heptandisäure (Pimelinsäure), Octandisäure (Suberinsäure), Nonandisäure (Azelainsäure),

Decandisäure (Sebacinsäure), Undecandisäure, Dodecandisäure, Tridecandisäure, Tetradecandisäure, Hexadecandisäure und Octadecandisäure. Es sind auch Derivate davon und Mischungen davon möglich. Vorzugsweise ist die Dicarbonsäure ausgewählt aus der Liste bestehend aus Decandisäure (Sebacinsäure), Undecandisäure, Dodecandisäure, Tridecandisäure, Tetradecandisäure, besonders bevorzugt ist Dodecandisäure.

Vorzugsweise ist das Polyesterpolyole **PP** erhältlich durch die Reaktion von nur einem Vertreter aus der vorgehend beschriebenen Liste von Diolen und nur einem Vertreter aus der vorgehend beschriebenen Liste von Dicarbonsäuren.

Der Anteil des Polyesterpolyol **PP** beträgt 1.5 - 20 Gew.-%, bezogen auf das Gesamtgewicht der einkomponentigen hitzehärtenden Epoxidharzzusammensetzung. Vorzugsweise beträgt der Anteil des Polyesterpolyols **PP** 2 - 15 Gew.-%, 2.5 - 10 Gew.-%, 3 - 10 Gew.-%, insbesondere 4 - 8 Gew.-%, bezogen auf das Gesamtgewicht der einkomponentigen hitzehärtenden Epoxidharzzusammensetzung. Ein solcher Anteil führt zu gutem Ausbreitverhalten bei gleichzeitig hohen Zugscherfestigkeitswerten. Ein Anteil des Polyesterpolyols **PP** von 2 - 4.5 Gew.-%, 2.5 - 4 Gew.-%, bezogen auf das Gesamtgewicht der einkomponentigen hitzehärtenden Epoxidharzzusammensetzung, ist für hohe Werte für die Schlagschälfestigkeit (I-Peel), insbesondere bei - 30°C, vorteilhaft.

Die hitzehärtende Epoxidharzzusammensetzung enthält gegebenenfalls mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1,** Flüssigkautschuken **D2** und Core-Shell-Polymeren **D3.**

Bevorzugt ist der Zähigkeitsverbesserer **D** ein endständig blockiertes Polyurethanpolymer **D1,** vorzugsweise handelt es sich um ein endständig blockiertes Polyurethanprepolymer der Formel (I).

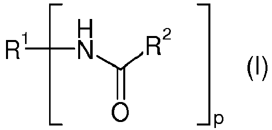

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

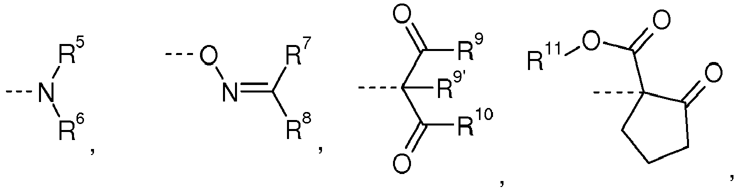

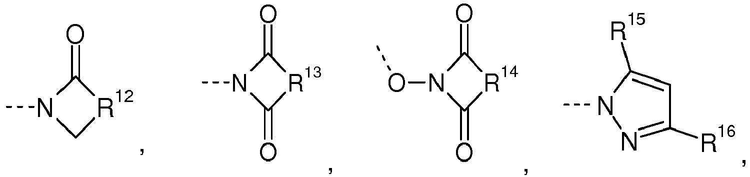

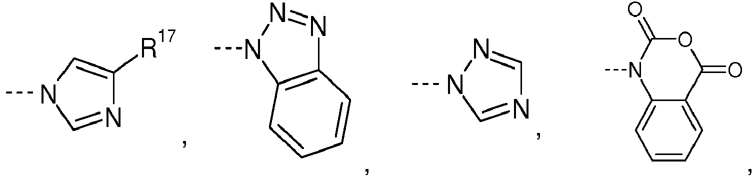

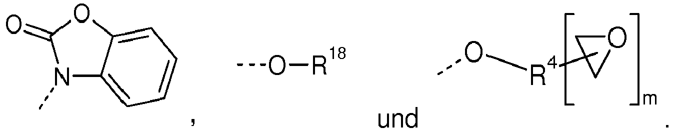

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln 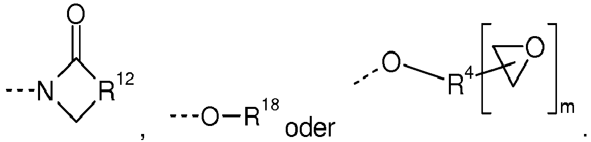 Als Substituent der Formel 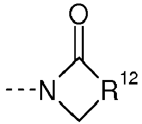 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

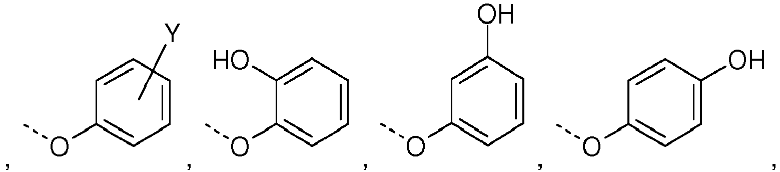

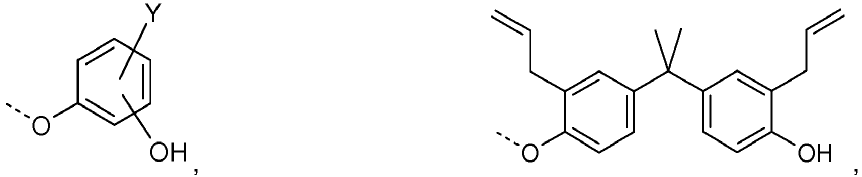

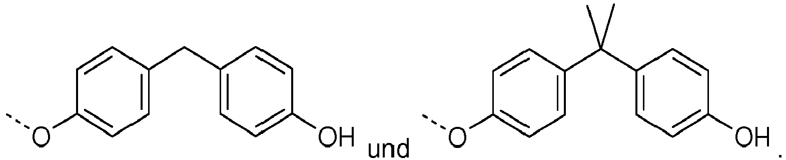

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für ---O-R¹⁸.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppengruppen, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCOreaktiver Gruppen auf.

Als Polymere **Q_{PM}** geeignet sind Polyole, z.B. die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0,02 mEq/g und mit einem mittleren Molekulargewicht im Bereich von 1000 - 30'000 Dalton, Polyoxybutylendiole und -triole, Polyoxypropylendiole und - triole mit einem mittleren Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von BASF unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hypox® CTBN von Emerald Perfomance Materials) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Desweiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hypro® ATBN von Emerald Perfomance Materials vertrieben werden, sowie weitere aminoterminierte synthetische Kautschuke oder Gemische der genannte Komponenten verwendet werden.

Für gewisse Anwendungen sind als Polymere **Q_{PM}** insbesondere HydroxylGruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII) 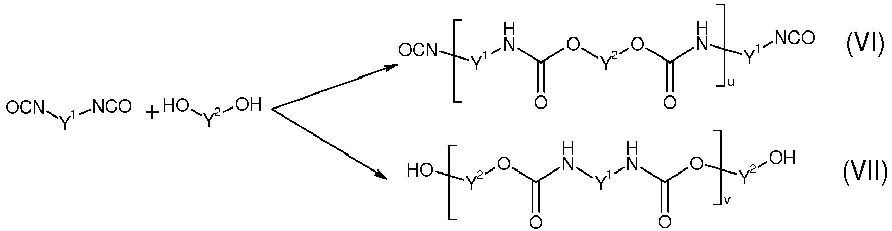 Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer der folgenden Formel gebildet werden:

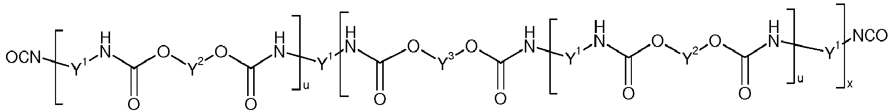

Aus der Spezies der Formel (VII) und einem Diisocyanat mit einem divalenten organischen Rest Y⁴ kann ein kettenverlängertes Polyurethanprepolymer der folgenden Formel gebildet werden:

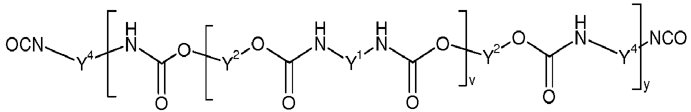

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO-Gruppen aufweisendes kettenverlängertes Polyurethanprepolymer entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polyurethanprepolymeren der Formel (I) beziehungsweise die Applikation des Klebstoffs erschweren.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymers nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylenebis-(1-Methyl-ethyliden)] (=Bisphenol-M), 4,4'-[bis-(hydroxyphenyl)-1,4-Phenylenbis-(1-Methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

In einer ersten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer aus mindestens einem Diisocyanat oder Triisocyanat sowie aus einem, gegebenenfalls substituierten, Polyphenol **Q_{PP}** hergestellt. Die Herstellung des Polyurethanprepolymers erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

Besonders bevorzugt ist die erste Ausführungsform.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Vorzugsweise beträgt der Anteil an:
Zähigkeitsverbesserer **D1** 10-60 Gew.-%, insbesondere 20-40 Gew.-%;
Zähigkeitsverbesserer **D2** 10-30 Gew.-%, insbesondere 20-30 Gew.-%:
Zähigkeitsverbesserer **D3** 10-30 Gew.-%, insbesondere 20-30 Gew.-%;
bezogen auf das Gesamtgewicht der Epoxidharzzusammensetzung.

In einer bevorzugten Ausführungsform enthält die einkomponentige hitzehärtende Epoxidharzzusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und pyrogene Kieselsäuren.

Vorteilhaft beträgt der Gesamtanteil des gesamten Füllstoffs **F** 5 - 40 Gewichts-%, vorzugsweise 5 - 20 Gewichts-%, bezogen auf das Gesamtgewicht der Epoxidharzzusammensetzung.

Die einkomponentige hitzehärtende Epoxidharzzusammensetzung kann weiter zusätzlich mindestens einen Epoxidgruppen-tragenden Reaktivverdünner **G** aufweisen. Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung.

Die einkomponentige hitzehärtende Epoxidharzzusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler umfassen.

Eine besonders bevorzugte hitzehärtende einkomponentige Epoxidharzzusammensetzung umfasst:
- 10 - 60 Gew.-%, insbesondere 30 - 50 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 50-100 Gew.-%, insbesondere 80-100 Gew.-%, des Epoxidharzes **A** um ein Epoxid-Flüssigharz und bei 0-30 Gew.-%, insbesondere 0-20 Gew.-%, besonders bevorzugt 5-15 Gew.-%, des Epoxidharzes **A** um ein Epoxid-Festharz;.
- 1 - 10 Gew.-%, insbesondere 2 - 6 Gew.-%, bezogen auf das Gesamtgewicht der Epoxidharzzusammensetzung, mindestens eines Härters **B** für Epoxidharze, welcher durch erhöhte Temperatur aktiviert wird;
- 1.5 - 20 Gew.-%, 2 - 15 Gew.-%, 2.5 - 10 Gew.-%, 3 - 10 Gew.-%, insbesondere 4 - 8 Gew.-%, bezogen auf das Gesamtgewicht der Epoxidharzzusammensetzung, mindestens eines Polyesterpolyols **PP**;
- mindestens einen Zähigkeitsverbesserer **D,** ausgewählt ist aus der Gruppe bestehend aus endständig blockierten Polyurethanpolymeren **D1,** Flüssigkautschuken **D2** und Core-Shell-Polymeren **D3,** vorzugsweise beträgt dabei der Anteil an:
   Zähigkeitsverbesserer **D1** 10-60 Gew.-%, insbesondere 20-40 Gew.-%;
   Zähigkeitsverbesserer **D2** 10-30 Gew.-%, insbesondere 20-30 Gew.-%:
   Zähigkeitsverbesserer **D3** 10-30 Gew.-%, insbesondere 20-30 Gew.-%;
   bezogen auf das Gesamtgewicht der Epoxidharzzusammensetzung;
- vorzugsweise 5 - 40 Gewichts-%, vorzugsweise 5 - 20 Gewichts-%, bezogen auf das Gesamtgewicht der Epoxidharzzusammensetzung, von einem Füllstoffe **F** ausgewählt aus der Gruppe bestehend aus Calciumcarbonat, Calciumoxid und pyrogene Kieselsäuren;
- vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G**;

Weiter kann es vorteilhaft sein, wenn die bevorzugte einkomponentige hitzehärtende Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Weiter kann es vorteilhaft sein, wenn die einkomponentige hitzehärtende Epoxidharzzusammensetzung einen Schwellenwert für den Betrag der komplexen Viskosität η* von mehr als 20'000 Pas, insbesondere mehr als 40'000 Pas, bevorzugt mehr als 60'000 Pas, besonders bevorzugt mehr als 80'000 Pas, insbesondere bevorzugt mehr als 100'000 Pas, aufweist.

Vorzugsweise erreicht die einkomponentige hitzehärtende Epoxidharzzusammensetzung mehr als 50%, insbesondere mehr als 70%, insbesondere mehr als 80%, des Viskositätsanstiegs, ausgehend von dem Betrag der komplexen Viskosität η* bei Beginn der Messung bei 150°C (Ende Phase 1, Beginn der Phase 2), d.h. bei Beginn der Abkühlung ausgehend von 150°C mit einer Abkühlrate von -23°C/min, auf den Schwellenwert für den Betrag der komplexen Viskosität η* von mehr als 20'000 Pas, insbesondere mehr als 40'000 Pas, bevorzugt mehr als 60'000 Pas, besonders bevorzugt mehr als 80'000 Pas, insbesondere bevorzugt mehr als 100'000 Pas, innerhalb von 20 Sekunden, bevorzugt innerhalb von 10 Sekunden.

Es ist weiter bevorzugt wenn dies vor dem Erreichen der Abkühlung der einkomponentigen hitzehärtenden Epoxidharzzusammensetzung auf 25°C erreicht wird. Besonders bevorzugt wird dies 80 - 280 Sekunden nach Start der Abkühlung der einkomponentigen hitzehärtenden Epoxidharzzusammensetzung von 150°C mit einer Abkühlrate von -23°C/min erreicht.

Vorzugsweise erreicht die einkomponentige hitzehärtende Epoxidharzzusammensetzung einen Höchstwert für den Betrag der komplexen Viskosität η* von mehr als 100'000 Pas, insbesondere mehr als 200'000 Pas, bevorzugt mehr als 300'000 Pas, besonders bevorzugt mehr als 500'000 Pas, bevorzugt vor dem Erreichen der Abkühlung der einkomponentigen hitzehärtenden Epoxidharzzusammensetzung auf 25°C, vorzugsweise 80 - 280 Sekunden nach Start der Abkühlung der Zusammensetzung von 150°C mit einer Abkühlrate von -23°C/min.

Der vorgehend erwähnte Betrag der komplexen Viskosität η* wird wie nachfolgend in den Beispielen beschrieben oszillographisch bestimmt mittels eines Rheometers mit beheizbarer Platte (MCR 302, AntonPaar) (Spalt 200 µm, Mess-Plattendurchmesser: 25 mm (Platte/Platte), Deformation 0,01 bei 5 Hz, in einem Temperaturbereich von 150 - 25°C (Abkühlrate: -23°C/min). Die vorgehend erwähnte Methode aus drei Phasen entspricht der in den Beispielen unter "Messung Viskositätsverhalten" beschriebenen Methode.

Vorzugsweise weist die einkomponentige hitzehärtende Epoxidharzzusammensetzung im ausgehärteten Zustand mindestens eine, vorzugsweise mehrere, besonders bevorzugt sämtliche nachstehend aufgeführten mechanischen Eigenschaften auf. Schlagschälfestigkeit (I-Peel) und Zugscherfestigkeit (ZSF) werden gemessen wie nachfolgend in den Beispielen beschrieben. Zugfestigkeit und E-Modul werden bestimmt nach DIN EN ISO 527.

| | |
|---|---|
| Zugfestigkeit [MPa] | > 10, > 20, insbesondere > 25 |
| E-Modul [MPa] | > 500, > 1000, insbesondere > 2000 |
| I-Peel (23°C) [N/mm] | > 20, insbesondere > 25 |
| I-Peel (-30°C) [N/mm] | > 10, insbesondere > 15 |
| ZSF [MPa] | > 15, insbesondere > 20 |

Vorzugsweise weist die einkomponentige hitzehärtende Epoxidharzzusammensetzung bei 23°C eine Viskosität von > 5'000 Pas, > 10'000 Pas, insbesondere > 15'000 Pas, auf, wobei die Viskosität oszillographisch bestimmt wird mittels eines Rheometers mit beheizbarer Platte (MCR 302, AntonPaar) (Spalt 1000 µm, Mess-Plattendurchmesser: 25 mm (Platte/Platte), Deformation 0,01 bei 5 Hz).

Weiter ist es bevorzugt, wenn die einkomponentige hitzehärtende Epoxidharzzusammensetzung bei dem Einbringen in Schritt c) eine Temperatur von 40 - 100°C, insbesondere 50 - 100°C, besonders bevorzugt 50 - 80°C, aufweist.

Weiter weist die einkomponentige hitzehärtende Epoxidharzzusammensetzung bei dem Einbringen in Schritt c) eine Temperatur von maximal 20°C, maximal 15°C, vorzugsweise maximal 10°C, unter dem Schmelzpunkt des Polyesterpolyols PP, auf. Dies ist beispielsweise aus Tabelle 6 ersichtlich. Der Schmelzpunkt wird vorzugsweise mit einem DSC-Gerät (DIN 53 765) bestimmt. Die Probe und ein leerer Referenztiegel werden mit einer Aufheizrate von 20°C/min erwärmt. Der Schmelzpunkt entspricht dem Maximum des Schmelzpeaks.

Auch ist es vorteilhaft, wenn die einkomponentige hitzehärtende Epoxidharzzusammensetzung bei dem Einbringen in Schritt c) eine Viskosität von < 3'000 Pas, < 2'000 Pas, insbesondere < 1'000 Pas, aufweist, wobei die Viskosität oszillographisch bestimmt wird mittels eines Rheometers mit beheizbarer Platte (MCR 302, AntonPaar) (Spalt 1000 µm, Mess-Plattendurchmesser: 25 mm (Platte/Platte), Deformation 0,01 bei 5 Hz).

Auch ist es bevorzugt, wenn das Verfahren zusätzlich den Schritt d) der Aushärtung der einkomponentigen hitzehärtenden Epoxidharzzusammensetzung, insbesondere bei einer Temperatur von mindestens 100°C, mindestens 120°C, mindestens 130°C, insbesondere auf eine Temperatur von 140 - 220°C, insbesondere von 140 - 200°C, besonders bevorzugt zwischen 160 und 190°C, für mindestens 10 min, mindestens 20 min, insbesondere zwischen 20 - 60 min, umfasst.

Das Einbringen der einkomponentigen hitzehärtenden Epoxidharzzusammensetzungen in den Hohlraum (1) in Schritt c) erfolgt vorzugsweise durch eine Pumpe, wobei die einkomponentige hitzehärtende Epoxidharzzusammensetzung aus einem Tank gefördert wird.

Ein weiterer Aspekt der vorliegenden Erfindung betrifft die Verwendung einer einkomponentigen hitzehärtenden Epoxidharzzusammensetzung wie sie als einkomponentige hitzehärtende Epoxidharzzusammensetzung vorgehend beschrieben ist, zur Einbringung, insbesondere Injektion, in einen Hohlraum (1) zwischen zwei aneinander angeordneten Formkörpern **S1** und **S2,** zur Verbindung, insbesondere Verklebung, der beiden Formkörper **S1** und **S2** miteinander. Vorzugsweise handelt es sich bei den einkomponentigen hitzehärtenden Epoxidharzzusammensetzung um solche, wie sie in der vorliegenden Beschreibung als bevorzugte ausgewiesen sind.

Noch ein Aspekt der vorliegenden Erfindung betrifft die Verwendung von Polyesterpolyolen **PP** wie sie als Polyesterpolyole **PP** vorgehend beschrieben sind, in einkomponentigen hitzehärtenden Epoxidharzzusammensetzungen zur Verringerung des Austrittverhaltens durch seitliche Öffnungen in Hohlräumen bei Einbringen, insbesondere Injektion, der einkomponentigen hitzehärtenden Epoxidharzzusammensetzungen in Hohlräume mit seitlichen Öffnungen. Bei den erwähnten Hohlräumen handelt es sich insbesondere um vorgehend beschriebene offenen Hohlräume (1). Vorzugsweise handelt es sich bei den Polyesterpolyolen **PP,** respektive den einkomponentigen hitzehärtenden Epoxidharzzusammensetzung, um solche, wie sie in der vorliegenden Beschreibung als bevorzugte ausgewiesen sind.

Im Folgenden wird die Erfindung durch Beispiele weiter erläutert, die die Erfindung aber in keiner Weise einschränken sollen.

### Figurenlegende

- 1: Hohlraum
- 2: Einfüllöffnung
- 3a: Einfüllkanal
- 3b: Einfüllkanal
- 4: Materialaussparung
- 5: Basiselement
- 6: Transparentes Deckelement
- 7: Kanal
- 8: Abstandhalter
- 9: Einfüllöffnung
- 10: Fixierschrauben
- 11: Eingebrachte Epoxidharzzusammensetzung
- 12: Begrenzungsmarkierung
- 13: Ausbreitungsmarkierungen

### Beispiele

Es wurde nach Epoxidharzzusammensetzungen gesucht, welche sich bei der Injektion in einen offenen Hohlraum vorwiegend in den für die Epoxidharzzusammensetzungen vorgesehene Hohlraum ausbreiten und die Ausbreitung in seitliche Öffnungen ausreichend gering ist, dass diese nicht durch Dichtungselemente verhindert werden muss. Dafür wurde ein Testverfahren entwickelt um ein solches Ausbreitungsverhalten in hitzehärtenden einkomponentigen Epoxidharzzusammensetzungen zu untersuchen.

### Testverfahren für Ausbreiteigenschaften:

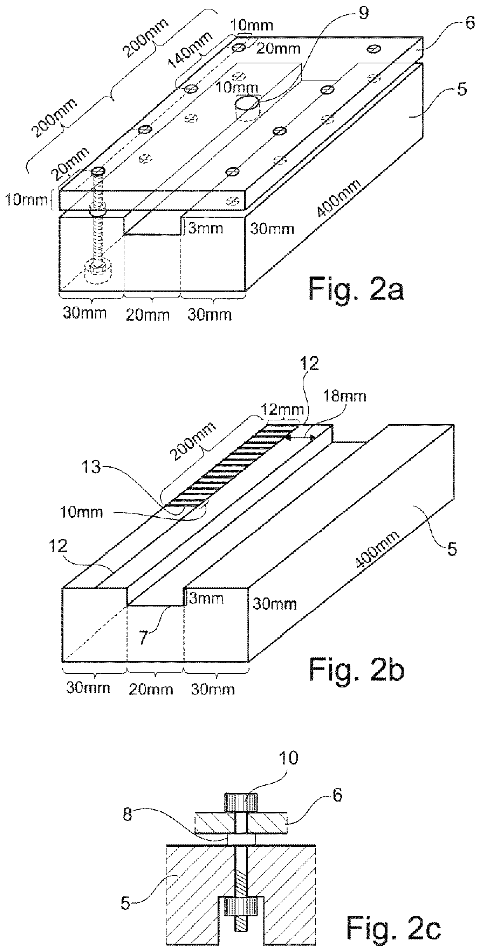

Das Testverfahren benutzt einen Verbund von zwei Formkörpern bestehend aus einem Basiselement 5 und einem transparenten Deckelement 6 wie es in der Figure 2a dargestellt ist. Das rechteckige Basiselement 5 besteht aus Polyamid und weist eine Länge von 400 mm, eine Breite von 80 mm sowie eine Höhe von 30 mm auf. Das Basiselement 5 weist einen mittig verlaufenden eingelassenen Kanal 7 mit einem rechtwinkligen Querschnitt und einer Tiefe von 3 mm und einer Breite von 20 mm auf. Dies ist beispielsweise in der Figur 2b ersichtlich.

Auf dem Basiselement 5 sind im Abstand von 12 mm von der Breitseite (oder 18 mm gemessen vom Kanal 7) eine parallel zum Kanal 7 verlaufende Begrenzungsmarkierung 12 aufgebracht. Rechtwinklig zur Begrenzungsmarkierung 12, im Abstand von jeweils 10 mm, verlaufen Ausbreitungsmarkierungen 13. Die erste Begrenzungsmarkierung beginnt in der Mitte des Basiselements 5 und die restlichen Begrenzungsmarkierungen sind entlang der Begrenzungsmarkierung bis zum Aussenrand des Basiselements angeordnet.

Zwischen Basiselement 5 und Deckelelement 6 sind Abstandhalter 8 angeordnet welche einen Spalt (mit einer gleichbleibenden Breite) zwischen Basiselement und Deckelelement gewährleisten. Dies ist beispielsweise in der Figur 2c ersichtlich. Die Höhe des Spaltes ist mittels Unterlagscheiben als Abstandhalter 8 einstellbar und beträgt 1 mm. Basiselement und Deckelelement werden mittels 8 Fixierschrauben 10 zusammengehalten.

Das transparente Deckelement 6 besteht aus Polymethylmethacrylat (PMMA) und weist eine Länge von 400 mm, eine Breite von 80 mm sowie eine Dicke von 10 mm auf. Im Deckelelement 6 ist mittig (jeweils Abstand von 35 mm von jeder Längsseite, resp. 195 mm von jeder Breitseite) eine Einfüllöffnung 9 mit einer Durchmesser von 10 mm eingelassen. Im zusammengebauten Zustand kommt die Einfüllöffnung 9 genau über der Mitte des Kanals 7 des Basiselements 5 zu liegen.

Das Einbringen der Epoxidharzzusammensetzung von aussen durch die Einfüllöffnung 9 in den Kanal 7 erfolgt mit der nachfolgend ausgewiesenen Injektionsgeschwindigkeit, respektive Injektionsdruck, und Injektionstemperatur.

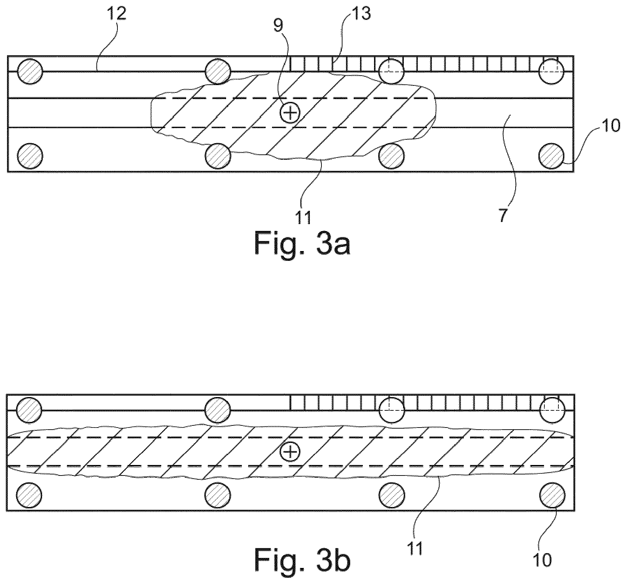

Die Figuren Fig. 3a und Fig. 3b zeigen eine Aufsicht auf den mit 8 Fixierschrauben 10 zusammengebauten Verbund von Basiselement 5 und transparentem Deckelement 6. Sie zeigen eine eingebrachte Epoxidharzzusammensetzung 11, welche sich entlang des Kanals 7 ausgebreitet hat. Dabei zeigt Fig. 3a eine Situation, in der sich die eingebrachte Epoxidharzzusammensetzung 11 seitlich bis zur Begrenzungsmarkierung 12 ausgebreitet hat. Erreicht die Epoxidharzzusammensetzung die Begrenzungsmarkierung 12 wird die Injektion gestoppt und anhand der Ausbreitungsmarkierungen 13 die Ausbreitung in Kanalrichtung in Anzahl Ausbreitungsmarkierungen bestimmt, wobei die Ausbreitungsmarkierungen in der Mitte des Basiselements als Startpunkt dient und nicht mitgezählt wird. Die erreichte Ausbreitungsmarkierungen +1 dient als Wert für die sogenannte "Squeeze-out-ratio".

In dem Beispiel von Fig. 3a wird die 10te Begrenzungsmarkierung erreicht, was einer Ausdehnung von 100 mm entspricht, respektive einer Squeeze-out-ratio von 11 (Markierung 10+1).

Fig. 3b zeigt eine Situation, in welcher sich die bereits eingebrachte Epoxidharzzusammensetzung 11 vorwiegend entlang des Kanals 7 ausbreitet hat. Während der Injektion hat die Epoxidharzzusammensetzung die Begrenzungsmarkierung 12 bis zum Austritt aus dem Kanalende nicht erreicht. Dies entspricht einer Ausdehnung von mehr als 200 mm, respektive einer Squeeze-out-ratio von > 20.

Wie nachfolgend beschrieben wurde überraschenderweise gefunden, dass erfindungsgemässe Epoxidharzzusammensetzungen unter anderem in dem Testverfahren ein Verhalten gemäss Figur 3b zeigen. Die erwärmten erfindungsgemässen Epoxidharzzusammensetzungen verbreiteten sich vorwiegend in Richtung des Kanals 7 und fliessen zumindest teilweise in den Spalt mit einer Dicke von 1 mm zwischen Basiselement 5 und Deckelelement 6. Dadurch, dass der Spalt geringer ist als der Abstand zwischen einem Boden des Kanals 7 und dem transparenten Deckelelement 6 kühlt die Epoxidharzzusammensetzung im Spalt schneller aus als im Bereich des Kanals 7 und verfestigt sich als Folge dieser Abkühlung im Bereich des Spalts. Dies führt zu einer sich selbst abdichtenden Funktion der Epoxidharzzusammensetzung im Bereich des Spalts.

Es wurde zuerst versucht, die Ausbreitungseigenschaften der Epoxidharzzusammensetzung mittels Anpassung der Viskosität und/oder der thixotropen Strukturaufbauzeit zu beeinflussen.

Es wurden Epoxidharzzusammensetzung gemäss Tabelle 1 (Tab.1) hergestellt.

**Tabelle 1**

| **Ingredient** | **Gew.-Teile** |
|---|---|
| Epoxy-Flüssigharz, D.E.R. 331 (Bisphenol-A-diglycidylether), Dow | 50 |
| Reaktivverdünner, Hexandiol-glycidylether, Denacol EX-212, Nagase America | 1 |
| Zähigkeitsverbesserer ***D-1*** | 35 |
| Härter, Dicyandiamid (= *"Dicy*") | 4.67 |
| Beschleuniger, substituierter Harnstoff | 0.22 |
| Pyrogene Kieselsäure | 5 |

### Herstellung eines Zähigkeitsverbesserers ("D-1")

150 g Poly-THF 2000 (OH-Zahl 57 mg/g KOH) und 150 g PolyBD R45V (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet. Folgende Rohstoffe wurden dazu eingesetzt:

| |
|---|
| Poly-THF 2000 (Difunktionelles Polybutylenglykol) |
| (OH-Equivalentgewicht = ca. 1000 g/OH-Equivalent), BASF |
| PolyBD R45V (Hydroxylterminertes Polybutadien) |
| (OH-Equivalentgewicht = ca. 1230 g/OH-Equivalent), Cray Valley |
| Isophoron-diisocyanat (= "IPDI"), Evonik |
| Cardolite NC-700 (Cardanol, meta-substituiertes Alkenyl-mono-Phenol), Cardolite |

Die Epoxidharzzusammensetzung gemäss Tabelle 1 hat eine Viskosität η von 0-5000 und eine thixotrope Strukturaufbauzeit auf 50% der Ausgangsstruktur (Thixotropic recovery time 50% in Sekunden) von 5-15. Die komplexe Viskosität η* wurde bestimmt unter Verwendung eines Rheometers (Physica MCR 302, Anton Paar) mittels rotatorischer Messung (Spalt: 1 mm, Platte/Platte, Plattendurchmesser: 25 mm, Scherrate: 0.1 s-1) bei einer Temperatur von 20°C.

Basierend auf dieser Zusammensetzung wurden Epoxidharzzusammensetzungen mit unterschiedlicher Viskosität η und/oder unterschiedlicher thixotroper Strukturaufbauzeit hergestellt. Durch Variation der Anteile in Gew.-% des Reaktivverdünners und des Thixotropiermittels (pyrogene Kieselsäure) sowie gegebenenfalls durch Austausch der pyrogenen Kieselsäure durch organophile Schichtsilikate konnten Epoxidharzzusammensetzungen mit unterschiedlicher Viskosität η und/oder unterschiedlicher thixotroper Strukturaufbauzeit erhalten werden.

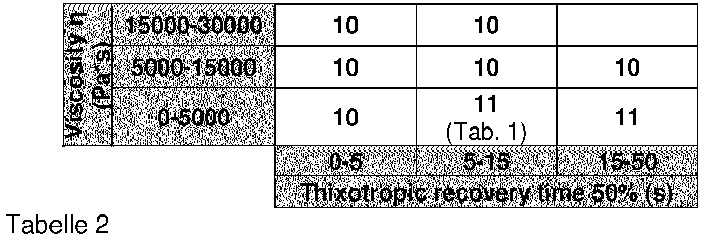

Von den vorgehend erwähnten Epoxidharzzusammensetzungen wurden bei einer Injektionstemperatur von 60°C und einem Injektionsdruck von 2 bar die Ausbreitungseigenschaften, d.h. die Squeeze-out-ratio bestimmt.

Überraschenderweise wurde gefunden, dass weder die Viskosität η noch die thixotrope Strukturaufbauzeit einen signifikanten Einfluss auf die Squeeze-out-ratio haben. Weiter sind die Ausbreitungseigenschaften von allen Epoxidharzzusammensetzungen mit einem Wert von 10 - 11 ungenügend.

Weiter wurde untersucht, ob die Anteile der eingesetzten Rohstoffe der Epoxidharzzusammensetzungen einen Einfluss auf die Ausbreitungseigenschaften haben. Dazu wurde bei der Epoxidharzzusammensetzung aus Tabelle 1 die Menge des Flüssigharzes und des Zähigkeitsverbesserers D-1 verändert.

**Tabelle 3**

| **Formulation** | **Variation** | **Squeeze-out-ratio 60°C, 2 bar** | **Squeeze-out-ratio 60°C**, **1 bar** |
|---|---|---|---|
| *(Tab.1)* | *50 Gew.-teile* D.E.R. 331, *35 Gew.-teile* D-1 | *11* | *n.d.* |
| INJ-1 | +20 *Gew.-teile* D.E.R. 331, -20 *Gew.-teile* D-1 | 10 | 11 |
| INJ-2 | -20 *Gew.-teile* D.E.R. 331, +20 *Gew.-teile* D-1 | 11 | 12 |

Von den Zusammensetzungen wurde bei einer Injektionstemperatur von 60°C und einem Injektionsdruck von 1 bar, resp. 2 bar, die Ausbreitungseigenschaften, d.h. die Squeeze-out-ratio bestimmt.

Überraschenderweise wurde gefunden, dass die Anteile der eingesetzten Rohstoffe der Epoxidharzzusammensetzungen keinen signifikanten Einfluss auf die Squeeze-out-ratio haben. Weiter sind die Ausbreitungseigenschaften von allen Epoxidharzzusammensetzungen mit einem Wert von 10 - 12 ungenügend.

Weiter wurde untersucht, ob die Injektionstemperatur oder der Injektionsdruck, respektive die Injektionsgeschwindigkeit, einen Einfluss auf die Ausbreitungseigenschaften haben. Dazu wurden Epoxidharzzusammensetzungen mit unterschiedlichen Viskositäten η (angelehnt an die Epoxidharzzusammensetzung aus Tabelle 1) verwendet. Die Viskosität wurde rotatorisch bestimmt wird mittels eines Rheometers mit beheizbarer Platte (MCR 302, AntonPaar) (Spalt 1000 µm, Mess-Plattendurchmesser: 25 mm (Platte/Platte), Scherrate 0.1 s-1, Temperatur: 20°C).

**Tabelle 4, "n.b." = nicht bestimmt**

| **Formulation** | **η (Pa*s)** | Injektionsdruck | Injektionstemperatur | |
|---|---|---|---|---|
| | | | **23°C** | **60°C** |
| INJ-3 | 1750 | 2 bar | 8 | 11 |
| | | 6 bar | 8 | 11 |
| (Tab. 1) | 2020 | 2 bar | 8 | 11 |
| | | 6 bar | 8 | 10 |
| INJ-4 | 6930 | 2 bar | 8 | 10 |
| | | 6 bar | 8 | 11 |
| INJ-5 | 10300 | 2 bar | nicht pumpbar | n.b. |
| | | 6 bar | 8 | 10 |
| INJ-6 | 27720 | 2 bar | nicht pumpbar | n.b. |
| | | 6 bar | 8 | 10 |

Überraschenderweise wurde gefunden, dass weder die Injektionstemperatur noch der Injektionsdruck, respektive die Injektionsgeschwindigkeit, einen signifikanten Einfluss auf die Squeeze-out-ratio haben. Weiter sind die Ausbreitungseigenschaften von allen Epoxidharzzusammensetzungen mit einem Wert von 8 - 11 ungenügend.

Weiter wurde untersucht, ob die Verwendung von zusätzlichen Rohstoffen in den Epoxidharzzusammensetzungen einen Einfluss auf das Ausbreitungsverhalten hat. Es wurden verschiedene solcher Rohstoffe getestet. Diese sind in der Tabelle 5 ausgeführt.

**Tabelle 5, *=Nicht homogen nach Abkühlung, n.b. = nicht bestimmt**

| Mischung | Typ | Struktur | Produkt | Hersteller | Verhältnis in Flüssigharz | Smp. | Mischbedingungen | Mischbarkeit | Viskositätsanstieg (150°C auf 25°C) |
|---|---|---|---|---|---|---|---|---|---|
| A | Polyesterpolyol | Terephthalsäure und Hexandisäure mit 1,6 hexandiol | Dynacoll 7340 | Evonik | 1:2 | 96°C | 30' 140°C | **JA** | **langsam** |
| B | Polyesterpolyol | Hexandisäure mit 1,6 hexandiol | Dynacoll 7360 | Evonik | 1:2 | 55°C | 30' 100°C | **JA** | **langsam** |
| C | Polyesterpolyol | Dodecandisäure mit 1,6 hexandiol | Dynacoll 7380 | Evonik | 1:2 | 70°C | 30' 120°C | **JA** | **schnell** |
| D | Polyesterpolyol | Dodecandisäure mit Ethylenglykol | Dynacoll 7330 | Evonik | 1:2 | 85°C | 30' 130°C | **JA** | **schnell** |
| E | Diamidwachs | Diamidwachs | Thixatrol MAX | Elementis | 1:4 | 100-120°C | 30' 150°C | **JA** | **langsam** |
| | Polyester | Ester von Montansäuren | Licolub WE 40 P | Clariant | 1:4 | 73-79°C | 30' 130°C | **NEIN^{*}** | **n.b.** |
| | Polyester | Esterwachs auf Basis von Montansäuren | Licolub WE 4 P | Clariant | 1:4 | 79-81°C | 30' 130°C | **NEIN^{*}** | **n.b.** |
| | Polyester | Esterwachs auf Basis von Montansäuren | Licowax E P | Clariant | 1:4 | 79-83°C | 30' 130°C | **NEIN^{*}** | **n.b.** |
| F | Polyesterpolyol | | Fineplus HM 3123 | Dic | 1:2 | 85°C | 30' 130°C | **JA** | **schnell** |

### Messung Mischbarkeit:

Von diesen Rohstoffen wurden Mischungen mit Epoxy-Flüssigharz erstellt um das Mischverhalten zu bestimmen. Dabei wurden die Rohstoffe etwa 40°C über ihrem Schmelzpunkt während ca. 30 Minuten mit Epoxy-Flüssigharz (Epoxy-Flüssigharz, D.E.R. 331 (Bisphenol-A-diglycidylether), Dow) gemäss dem in Tabelle 5 ausgewiesenen Verhältnis vermischt bis eine klare Mischung entstand. Bei der Mischung mit Dynacoll 7380 bedeutet beispielsweise "1:2" 33.3 Gew.-% Polyesterpolyol und 66.6 Gew.-% Epoxy-Flüssigharz.

Diese Mischung wurde anschliessend auf 25°C heruntergekühlt. Bei den Mischungen mit den Polyestern Licolub WE 40P, Licolub WE 4P und Licowax EP zeigte sich, dass sich nach Abkühlung keine homogene Mischung bildeten. Diese sind als Zusätze für erfindungsgemässe hitzehärtende Epoxidharzzusammensetzungen nicht geeignet.

Bei den restlichen Rohstoffen lag nach Abkühlung eine homogene Mischung vor. Von diesen Zusammensetzungen wurde danach das Viskositätsverhalten bei Abkühlung von 150°C auf 25°C bestimmt.

### Messung Viskositätsverhalten:

Die Methode besteht aus drei Phasen. Während der ersten Phase liegt die Mischung bei einer Temperatur von 150°C vor, d.h. der zugegebene Rohstoff befindet sich im flüssigen Zustand. In der zweiten Phase kühlt die Temperatur mit einer konstanten Abkühlungsrate auf 25°C ab. In der dritten Phase wird die Mischung bei einer Temperatur von 25°C belassen. Anhand dieser Methode können das Verhalten der Verfestigung der Mischung, die "Schärfe" des Übergangs, sowie der Zeitpunkt bestimmt werden, wann die Verfestigung der Mischung eintritt.

Verwendet wurde ein Rheometer (Physica MCR 302, Anton Paar) mittels oszillographischen Messung (Spalt: 200 µm, Platte/Platte, Plattendurchmesser: 25 mm, Frequenz: 5 Hz, Solldeformation: 0.01) in einem Temperaturbereich von 25 - 150°C (Abkühlrate: -23°C/min, Aufheizrate: +53°C/min) gemessen.
Phase 1: Die Mischung wird auf eine Temperatur von 150°C gebracht und 265 Sekunden dort belassen.
Phase 2: Die Mischung wurde mit einer Abkühlrate: -23°C/min auf eine Temperatur von 25°C gebracht. D.h. es erfolgte eine gleichmässige und konstante Abkühlung der Mischung von 150°C auf 25°C innerhalb von 325 Sekunden mit einer gleichmässigen und konstanten Abkühlrate: -23°C/min.
Phase 3: Belassen der Mischung bei einer Temperatur von 25°C.

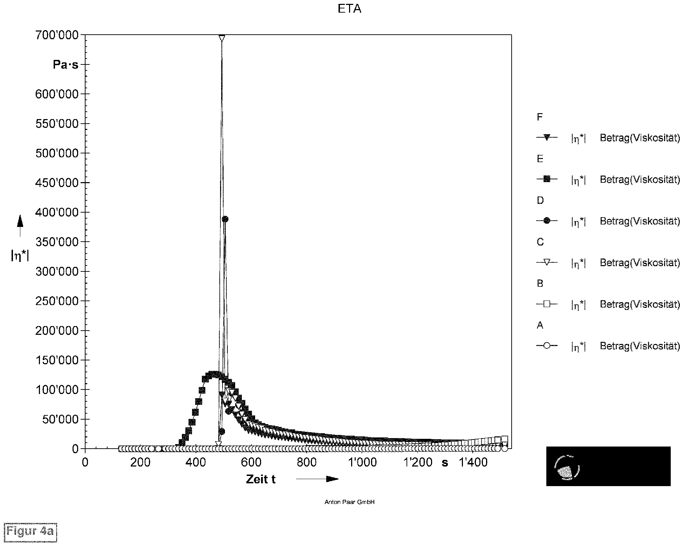

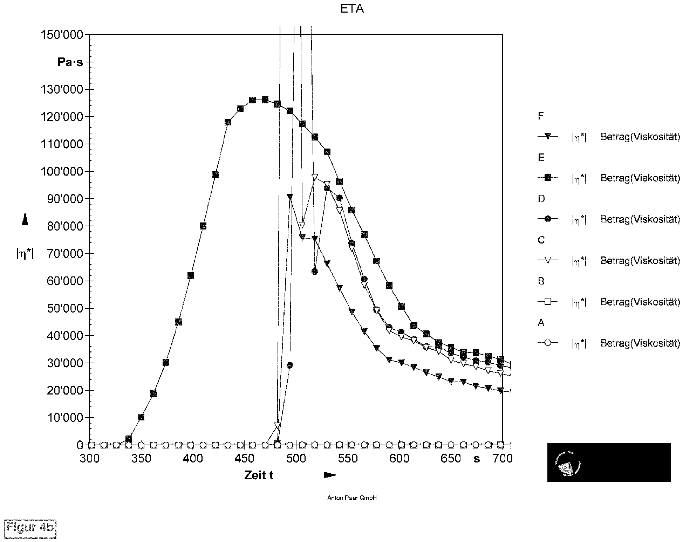

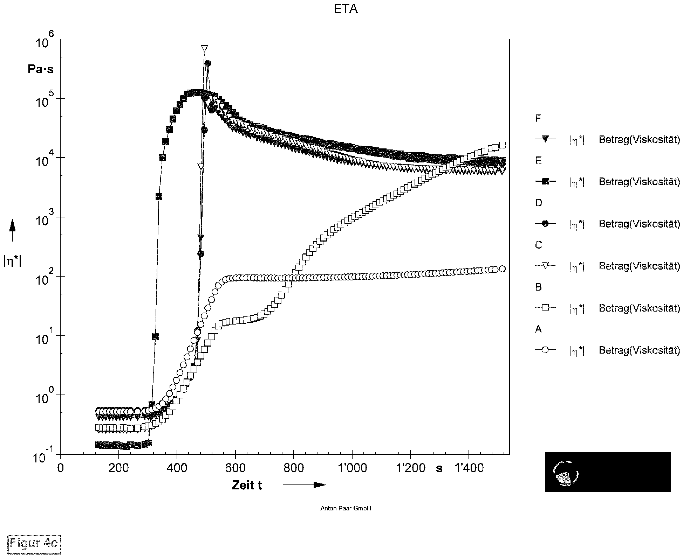

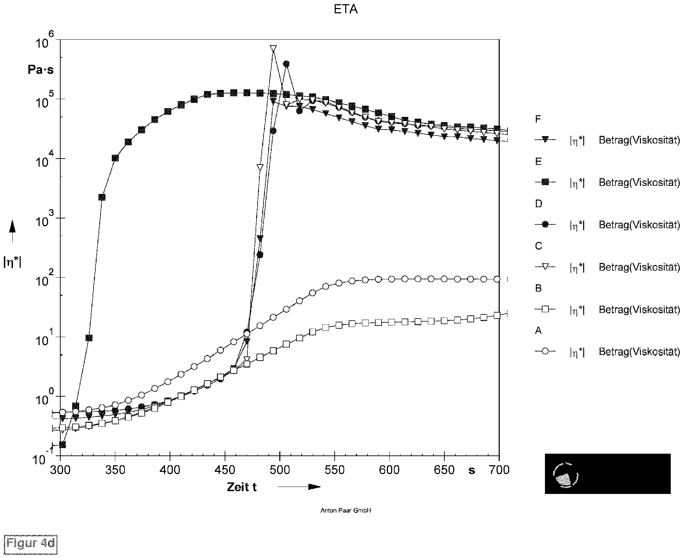

Bestimmt wurde aufgrund der oszillographischen Messung der Betrag der komplexen Viskosität η*. Die Figuren 4a-4d zeigen den Betrag der komplexen Viskosität η*. Der Verlauf des Betrags der komplexen Viskosität η* in Abhängigkeit von der Zeit [t in Sekunden] für die Mischungen A (○), B (□), C (Δ), D (●), E (■) und F (▼) sind in den Figuren 4a-4d wiedergegeben. Die Figuren 4c und 4d zeigen den Betrag der komplexen Viskosität η* dargestellt in logarithmischer Darstellung.

Verwendet wurde das vorgehend beschriebene Rheometer, respektive die vorgehend beschriebene oszillographische Messung. Die Mischungen wurden auf eine Temperatur von 150°C gebracht und die Messung gestartet. Der Beginn der Aufzeichnung der Messwerte ist ab 130 Sekunden nach Start der Messung in den Figuren 4a-4d wiedergegeben. 265 Sekunden nach Start der Messung wurde die Mischung von einer Temperatur von 150°C mit einer Abkühlrate von -23°C/min auf eine Temperatur von 25°C heruntergekühlt. 590 Sekunden nach Messbeginn wurde die Temperatur von 25°C erreicht. Die Mischung wurde bis ca. 1500 Sekunden nach Beginn der Messung bei 25°C belassen.

Für die Mischungen C (Δ), D (●), E (■) und F (T) ist ein hoher und schneller Viskositätsanstieg ersichtlich. Sie erreichen mehr als 80% des Viskositätsanstiegs, ausgehend von dem Betrag der komplexen Viskosität η* bei Beginn der Messung bei 150°C auf den Höchstwert für den Betrag der komplexen Viskosität η* innerhalb von 20 Sekunden.

Weiter erreichen sie den Höchstwert für den Betrag der komplexen Viskosität η* innerhalb von 80 - 280 Sekunden nach Start der Abkühlung der Mischungen von 150°C mit einer Abkühlrate von -23°C/min, insbesondere vor dem Erreichen einer Temperatur von 25°C.

Die Mischung E (■) zeigt einen langsamen Viskositätsanstieg und die Mischungen A (○) und B (□) zeigen einen langsamen und schwachen Viskositätsanstieg.

Basierend auf der Mischung C wurden Mischungen mit unterschiedlichen Gewichtsanteilen von Dynacoll 7380 bezogen auf das Gesamtgewicht der Mischungen von Dynacoll 7380 mit Epoxy-Flüssigharz hergestellt (33 Gew.-%, 7 Gew.-%, 3 Gew.-%, 2 Gew.-%).

Die Mischung mit 2 Gew.-% Dynacoll 7380 erreichte eine Höchstwert für den Betrag der komplexen Viskosität η* von 39'000. Weiter erreichte diese Mischung mehr als 80% des Viskositätsanstiegs auf 39'000, ausgehend von dem Betrag der komplexen Viskosität η* bei Beginn der Messung bei 150°C, innerhalb von 50 Sekunden.

Die anderen Mischungen erreichten einen Höchstwert für den Betrag der komplexen Viskosität η* von mehr als 100'000. Weiter erreichten die Mischungen mit 33 Gew.-% und 7 Gew.-% mehr als 80% des Viskositätsanstiegs auf 100'000, ausgehend von dem Betrag der komplexen Viskosität η* bei Beginn der Messung bei 150°C, innerhalb von 10 Sekunden

Unter Verwendung der Rohstoffe C, D, und F wurden das Ausbreitungsverhalten von hitzehärtenden einkomponentigen Epoxidharzklebstoffen basierend auf der Epoxidharzzusammensetzung aus Tabelle 1 mit unterschiedlicher Viskosität, unterschiedlicher Menge des Zähigkeitsverbesserers D-1 sowie gegebenenfalls zusätzlich enthaltend ein Epoxidfestharz hergestellt. Zusammensetzung **Z-1** enthält zusätzlich 15 Gew.-Teile Epoxidfestharz sowie 20 anstelle von 35 Gew.-Teilen Zähigkeitsverbesserer D-1 und weist eine Viskosität von 2500 Pas auf. Zusammensetzung **Z-2** enthält 20 anstelle von 35 Gew.-Teilen Zähigkeitsverbesserer D-1 und weist eine Viskosität von 1000 Pas auf. Zusammensetzung **Z-3** enthält zusätzlich 10 Gew.-Teile Epoxidfestharz sowie 15 anstelle von 35 Gew.-Teilen Zähigkeitsverbesserer D-1 und weist eine Viskosität von 3500 Pas auf.

Zu den Zusammensetzungen **Z-1, Z-2** und **Z-3** wurde 5 Gew.-% von Dynacoll 7380, Dynacoll 7330 oder Fineplus HM 3123, bezogen auf das Gesamtgewicht der entsprechenden Zusammensetzung zugegeben.

Aus Tabelle 6 ist ersichtlich, dass die Zusammensetzungen **Z-1, Z-2** und **Z-3** enthaltend den Rohstoff C (Dynacoll 7380) mit dem Schmelzpunkt von 70°C ein sehr gutes Ausbreitungsverhalten bei einer Injektionstemperatur von 60°C zeigen. Die Rohstoffe D (Dynacoll 7330) und F (Fineplus HM 3123) jedoch zeigen aufgrund ihres höheren Schmelzpunkts von jeweils 85°C bei einer Injektionstemperatur von 60°C ein ungeeignetes Ausbreitungsverhalten.

**Tabelle 6**

| Rohst off | Injektionsgeschwindigkeit 47 ml/min, Injektionstemperatur 60°C, 5 Gew.-% Rohstoff | | |
|---|---|---|---|
| | **Z-1** | **Z-2** | **Z-3** |
| C | >20 | >20 | >20 |
| D | 9 | 9 | 9 |
| F | 9 | 9 | 9 |

Wurden dasselbe Experiment mit einer Injektionstemperatur von 80°C anstelle von 60°C durchgeführt zeigten alle Epoxidharzklebstoffe ein gutes Ausbreitungsverhalten. Es ist daher vorteilhaft, wenn die einkomponentige hitzehärtende Epoxidharzzusammensetzung enthaltend den Rohstoff bei der Injektion eine Temperatur von maximal 20°C, maximal 15°C, vorzugsweise maximal 10°C, unter dem Schmelzpunkt des Rohstoffs, aufweist.

Zu der Epoxidharzzusammensetzung gemäss Tabelle 7 wurden unterschiedliche Gewichtsanteile von Dynacoll 7380 zugegeben und das Ausbreitungsverhalten bestimmt. Weiter wurden die Zugscherfestigkeit (ZSF) sowie die Schlagschälfestigkeit (I-Peel) bestimmt.

**Tabelle 7,* = maximale seitliche Ausbreitung im Spalt <10 mm, ** = maximale seitliche Ausbreitung im Spalt <1 mm.**

| **Rohstoffe (Gewichtsteile)** | | | | **Z-4** | **Z-5** | **Z-6** | **Z-7** | **Z-8** | **Z-9** |
|---|---|---|---|---|---|---|---|---|---|
| Epoxy-Flüssigharz, D.E.R. 331 (Bisphenol-A-diplycidylether), Dow | | | | 50 | 50 | 50 | 50 | 50 | 50 |
| Reaktivverdünner, Hexandiol-glycidylether, Denacol EX-212, Nagase America | | | | 1 | 1 | 1 | 1 | 1 | 1 |
| Zähigkeitsverbesserer D-1 | | | | 35 | 35 | 35 | 35 | 35 | 35 |
| Härter, Dicyandiamid (= "Dicy") | | | | 4.6 | 4.6 | 4.6 | 4.6 | 4.6 | 4.6 |
| Beschleuniger, substituierter Harnstoff | | | | 0.2 | 0.2 | 0.2 | 0.2 | 0.2 | 0.2 |
| Pyrogene Kieselsäure | | | | 5 | 5 | 5 | 5 | 5 | 5 |
| Dynacoll 7380 | | | | **0** | **2.5** | **5*** | **10**** | **20** | **30** |
| Dynacoll 7380 (Gew.-%) | | | | 0 | 2.5 | 5.0 | 9.5 | 17.3 | 23.8 |
| **Summe (Gewichtsteile)** | | | | 95.8 | 98.3 | 100.8 | 105.8 | 115.8 | 125.8 |
| Injektionsgeschwindigkeit: 47 ml/min | | | | 11 | 19 | >20 | >20 | >20 | >20 |
| Injektionstemperatur: 60 °C | | | | | | | | | |
| **Squeeze-out-ratio:** | | | | | | | | | |
| **ZSF** | 35' 175°C | RT | MPa | 24.8 | 20.8 | 20.6 | 16.0 | 10.0 | 7.2 |
| **I**-**Peel** | 35' 175°C | RT | N/mm | 33.3 | 35.0 | 33.7 | 24.1 | 5.7 | 3.8 |
| **I**-**Peel** | 35' 175°C | -30°C | N/mm | 34.9 | 37.5 | 33.9 | 23.1 | 0.2 | 0.2 |

Aus Tabelle 7 ist ersichtlich, dass Epoxidharzzusammensetzungen enthaltend eine Menge von mehr als 20 Gew.-% Dynacoll 7380 nicht mehr als strukturelle Klebstoffe geeignet sind. Überraschenderweise wurden gefunden, dass Epoxidharzzusammensetzungen enthaltend 2.5 Gew.-% Dynacoll 7380 besonders hohe Werte für I-Peel, insbesondere bei - 30°C, erhalten werden.

### Prüfmethoden:

### Zugscherfestigkeit (ZSF) (DIN EN 1465)

Gereinigte und mit Anticorit PL 3802-39S rückbeölte Prüfbleche von Stahl Elo H420 (Dicke 1,2mm) wurden auf einer Klebfläche von 25 x 10mm mit Glaskugeln als Abstandshalter in einer Schichtdicke von 0,3 mm mit dem Klebstoff verklebt und für 35 min bei 175°C Ofentemperatur ausgehärtet. Die Zugscherfestigkeit wurde auf einer Zugmaschine bei einer Zuggeschwindigkeit von 10mm/min in einer 3-fach Bestimmung gemäss DIN EN 1465 bestimmt.

### Schlagschälfestigkeit/Impact peel (I-Peel) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Proben wurden für für 35 min bei 175°C Ofentemperatur ausgehärtet. Die Messung der Schlagschälfestigkeit erfolgte jeweils bei den angegebenen Temperaturen (23°C, -30°C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

## Patentansprüche

1. Verfahren zur Verbindung, insbesondere strukturellen Verbindung, von zwei Formkörpern **S1** und **S2**, das Verfahren umfassend die Schritte:
a) Bereitstellen eines Formkörpers **S1**;
b) Anordnen eines Formkörpers **S2** an dem Formkörper **S1**, wobei sich ein Hohlraum (1) zwischen den beiden Formkörpern **S1** und **S2** bildet,
c) Einbringen einer einkomponentigen hitzehärtenden Epoxidharzzusammensetzungen in den Hohlraum (1),
wobei es sich bei der einkomponentigen hitzehärtenden Epoxidharzzusammensetzung um eine einkomponentige hitzehärtende Epoxidharzzusammensetzung handelt enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein Polyesterpolyol **PP**, erhältlich durch die Reaktion von
- mindestens einem Diol mit der Struktur HO-(CH₂)_{x'}-OH, wobei der Wert von x' = 2 bis 10 ist, und
- mindestens einer Dicarbonsäure mit der Struktur HOOC-(CH₂)_{y'}-COOH sowie Derivate dieser Dicarbonsäure, wobei der Wert von y' = 8 bis 18 ist,
und wobei der Anteil des Polyesterpolyol **PP** 1.5 - 20 Gew.-% beträgt, bezogen auf das Gesamtgewicht der einkomponentigen hitzehärtenden Epoxidharzzusammensetzung.

2. Verfahren gemäss Anspruch 1, **dadurch gekennzeichnet, dass** es sich bei dem Hohlraum (1) um einen offenen Hohlraum handelt.

3. Verfahren gemäss einem der vorgehenden Ansprüche, **dadurch gekennzeichnet, dass** sich der Abstand in dem Hohlraum (1) zwischen den beiden Formkörpern nach dem Schritt b) des Anordnens eines Formkörpers **S2** an dem Formkörper **S1** im Wesentlichen nicht ändert.

4. Verfahren gemäss einem der vorgehenden Ansprüche, **dadurch gekennzeichnet, dass** sich der Abstand zwischen den beiden Formkörpern , 0 - 100 mm, 0 - 30 mm neben dem Hohlraum (1) nach dem Schritt b) des Anordnens eines Formkörpers **S2** an dem Formkörper S1 im Wesentlichen nicht ändert.

5. Verfahren gemäss einem der vorgehenden Ansprüche, **dadurch gekennzeichnet, dass** die einkomponentige hitzehärtende Epoxidharzzusammensetzung durch mindestens eine Einfüllöffnung (2) in mindestens einem der beiden Formkörper eingebracht wird.

6. Verfahren gemäss einem der vorgehenden Ansprüche, **dadurch gekennzeichnet, dass** es sich bei dem Hohlraum (1) um eine Verbindungsstelle für den Verbund der beiden Formkörper handelt, insbesondere eine beabsichtigte strukturelle Verbindungsstelle.

7. Verfahren gemäss einem der vorgehenden Ansprüche, **dadurch gekennzeichnet, dass** es sich bei dem Hohlraum (1) um eine Materialaussparung (4) in mindestens einem der beiden Formkörper handelt.

8. Verfahren gemäss einem der vorgehenden Ansprüche, **dadurch gekennzeichnet, dass** das Verfahren zusätzlich den Schritt d) der Aushärtung der einkomponentigen hitzehärtenden Epoxidharzzusammensetzung, insbesondere bei einer Temperatur von mindestens 100°C, mindestens 120°C, mindestens 130°C, insbesondere auf eine Temperatur von 140 - 220°C, insbesondere von 140 - 200°C, besonders bevorzugt zwischen 160 und 190°C, für mindestens 10 min, mindestens 20 min, insbesondere zwischen 20 - 60 min, umfasst.

9. Verfahren gemäss einem der vorgehenden Ansprüche, **dadurch gekennzeichnet, dass** die einkomponentige hitzehärtende Epoxidharzzusammensetzung bei dem Einbringen in Schritt c) eine Temperatur von 40 - 100°C, insbesondere 50 - 100°C, besonders bevorzugt 50 - 80°C, aufweist.

10. Verfahren gemäss einem der vorgehenden Ansprüche, **dadurch gekennzeichnet, dass** die einkomponentige hitzehärtende Epoxidharzzusammensetzung bei dem Einbringen in Schritt c) eine Temperatur von maximal 20°C, maximal 15°C, vorzugsweise maximal 10°C, unter dem Schmelzpunkt des Polyesterpolyols PP, aufweist.

11. Verfahren gemäss einem der vorgehenden Ansprüche, **dadurch gekennzeichnet, dass** die einkomponentige hitzehärtende Epoxidharzzusammensetzung bei dem Einbringen in Schritt c) eine Viskosität von < 3'000 Pas, < 2'000 Pas, insbesondere < 1'000 Pas, aufweist, wobei die Viskosität oszillographisch bestimmt wird mittels eines Rheometers mit beheizbarer Platte (MCR 302, AntonPaar) (Spalt 1000 µm, Mess-Plattendurchmesser: 25 mm (Platte/Platte), Deformation 0,01 bei 5 Hz).

12. Verfahren gemäss einem der vorgehenden Ansprüche, **dadurch gekennzeichnet, dass** die einkomponentige hitzehärtende Epoxidharzzusammensetzung bei 23°C eine Viskosität von > 5'000 Pas, > 10'000 Pas, insbesondere > 15'000 Pas, aufweist, wobei die Viskosität oszillographisch bestimmt wird mittels eines Rheometers mit beheizbarer Platte (MCR 302, AntonPaar) (Spalt 1000 µm, Mess-Plattendurchmesser: 25 mm (Platte/Platte), Deformation 0,01 bei 5 Hz).

13. Verfahren gemäss einem der vorgehenden Ansprüche, **dadurch gekennzeichnet, dass** der Anteil des Polyesterpolyol **PP** 2 - 15 Gew.-%, 2.5 - 10 Gew.-%, 3 - 10 Gew.-%, insbesondere 4 - 8 Gew.-%, beträgt, bezogen auf das Gesamtgewicht der einkomponentigen hitzehärtenden Epoxidharzzusammensetzung.

14. Verwendung einer einkomponentigen hitzehärtenden Epoxidharzzusammensetzung wie sie als einkomponentige hitzehärtende Epoxidharzzusammensetzung in Anspruch 1 erwähnt wird, zur Einbringung, insbesondere Injektion, in einen Hohlraum (1) zwischen zwei aneinander angeordneten Formkörpern **S1** und **S2,** zur Verbindung, insbesondere Verklebung, der beiden Formkörper **S1** und **S2** miteinander.

15. Verwendung von Polyesterpolyolen **PP** wie sie als Polyesterpolyole **PP** in Anspruch 1 erwähnt sind, in einkomponentigen hitzehärtenden Epoxidharzzusammensetzungen zur Verringerung des Austrittverhaltens durch seitliche Öffnungen in Hohlräumen bei Einbringen, insbesondere Injektion, der einkomponentigen hitzehärtenden Epoxidharzzusammensetzungen in Hohlräume mit seitlichen Öffnungen.
